# EUROPÄISCHE PATENTANMELDUNG

(11) **EP 4 156 104 A1**
(43) Veröffentlichungstag der Anmeldung: **29.03.2023**
(21) Anmeldenummer: 21199484.3
(22) Anmeldetag: 28.09.2021
(51) Int. Cl.: G06T 7/73

(54) **VERFAHREN ZUR ERMITTLUNG EINER ZIELPOSITION**

(71) Anmelder: Siemens Aktiengesellschaft, 80333 München (DE)
(72) Erfinder: Benkert, Johannes, 90763 Fürth (DE); Recktenwald, Alois, 91074 Herzogenaurach (DE); Vogel, Julian, 90766 Fürth (DE)
(74) Vertreter: Siemens Patent Attorneys

(57) **Zusammenfassung**

Die Erfindung betrifft ein Verfahren zur Ermittlung einer Zielposition beim automatisierten Positionieren (2) einer Last auf einem Objekt. Um eine, im Vergleich zum Stand der Technik, verbesserte Performance und geringere Berechnungszeiten zu erreichen werden folgende Schritte vorgeschlagen: Erfassen (4) des Objekts mittels zumindest eines Sensors (70), Erstellen (6) einer 3D-Punktwolke (16), welche das Objekt repräsentiert, Projizieren (8) der 3D-Punktwolke (16) in zumindest eine 2D-Projektionsbene (18), Detektieren (10) zumindest einer Struktur zum Positionieren der Last mittels Bildverarbeitung, Rückprojizieren (12) der 2D-Projektionsbene (18) in den dreidimensionalen Raum und Ermitteln (14) einer Position der zumindest einen Struktur im dreidimensionalen Raum.

## Beschreibung

Die Erfindung betrifft ein Verfahren zur Ermittlung einer Zielposition beim automatisierten Positionieren einer Last auf einem Objekt.

Ferner betrifft die Erfindung eine Steuereinheit mit Mitteln zur Durchführung eines derartigen Verfahrens.

Überdies betrifft die Erfindung ein Computerprogramm zur Durchführung eines derartigen Verfahrens bei Ablauf in einer Steuereinheit.

Des Weiteren betrifft die Erfindung ein Positionierungssystem aufweisend zumindest einen, insbesondere laserbasierten, Sensor und eine Steuereinheit.

Darüber hinaus betrifft die Erfindung einen Kran aufweisend zumindest ein Positionierungssystem.

Ein derartiger Kran ist beispielsweise als Portalkran, insbesondere Containerkran, welcher auch Containerbrücke genannt wird, ausgeführt und wird in einem Hafenterminal zum Beladen von ISO Containern auf LKWs und Tragwagen, insbesondere Bahntragwagen, eingesetzt. Insbesondere in Container-Terminals laufen Verladevorgänge mit Hilfe von Kranen zunehmend automatisiert, also ohne manuelle Eingriffe von Operatoren, ab.

Die Offenlegungsschrift WO 2020/221490 A1 beschreibt ein Verfahren zur kollisionsfreien Bewegung einer Last mit einem Kran in einem Raum mit mindestens einem Hindernis. Um auf möglichst einfache Weise einen Sicherheitslevel zu erfüllen, wird vorgeschlagen, dass eine Position des Hindernisses bereitgestellt wird, wobei zumindest eine sichere Zustandsgröße der Last bereitgestellt wird, wobei aus der sicheren Zustandsgröße eine die Last umgebende Sicherheitszone ermittelt wird, wobei die Sicherheitszone in Relation zur Position des Hindernisses dynamisch überwacht wird.

Vor diesem Hintergrund liegt der Erfindung die Aufgabe zugrunde, ein Verfahren zur Ermittlung einer Zielposition beim automatisierten Positionieren einer Last auf einem Objekt anzugeben, das, im Vergleich zum Stand der Technik, eine verbesserte Performance und geringere Berechnungszeiten ermöglicht.

Die Aufgabe wird erfindungsgemäß gelöst durch ein Verfahren zur Ermittlung einer Zielposition beim automatisierten Positionieren einer Last auf einem Objekt aufweisend folgende Schritte: Erfassen des Objekts mittels zumindest eines Sensors, Erstellen einer 3D-Punktwolke, welche das Objekt repräsentiert, Projizieren der 3D-Punktwolke in zumindest eine 2D-Projektionsbene, Detektieren zumindest einer Struktur zum Positionieren der Last mittels Bildverarbeitung, Rückprojizieren der 2D-Projektionsbene in den dreidimensionalen Raum, Ermitteln einer Position der zumindest einen Struktur im dreidimensionalen Raum.

Ferner wird die Aufgabe erfindungsgemäß gelöst durch eine Steuereinheit mit Mitteln zur Durchführung eines derartigen Verfahrens.

Überdies wird die Aufgabe erfindungsgemäß gelöst durch ein Computerprogramm zur Durchführung eines derartigen Verfahrens bei Ablauf in einer Steuereinheit.

Des Weiteren wird die Aufgabe erfindungsgemäß gelöst durch ein Positionierungssystem mit zumindest einem, insbesondere laserbasierten, Sensor und einer derartigen Positionierungssystem.

Darüber hinaus wird die Aufgabe erfindungsgemäß gelöst durch einen Kran mit zumindest einem derartigen Sicherheitssystem.

Die in Bezug auf das Verfahren nachstehend angeführten Vorteile und bevorzugten Ausgestaltungen lassen sich sinngemäß auf die Steuereinheit, das Computerprogramm, das Positionierungssystem und den Kran übertragen.

Der Erfindung liegt die Überlegung zugrunde, bei einem Verfahren zur Ermittlung einer Zielposition beim automatisierten Positionieren einer Last auf einem Objekt eine verbesserte Performance und geringere Berechnungszeiten zu erreichen, indem eine Transformation von dreidimensionalen Daten in eine 2D-Projektionsbene durchgeführt wird. Eine derartige Last ist beispielsweise ein Container, während das Objekt beispielsweise ein LKW oder zumindest ein weiterer Container eines Containergebirges ist. Insbesondere wird ein derartiger Container Ecke auf Ecke auf einem Containergebirge oder, z.B. mittels Twistlocks, auf einem LKW platziert. Das Verfahren beinhaltet ein Erfassen des Objekts mittels zumindest eines Sensors, wobei der Sensor beispielsweise als laserbasierter Sensors ausgeführt ist. Aus den Sensordaten wird daraufhin eine 3D-Punktwolke erstellt, welche das Objekt repräsentiert.

In einem weiteren Schritt wird die 3D-Punktwolke des Objekts in zumindest eine 2D-Projektionsbene projiziert. Durch eine derartige Projektion wird eine Anzahl der für die Weiterverarbeitung relevanten Punkte reduziert. In einem weiteren Schritt wird zumindest eine Struktur zum Positionieren der Last mittels Bildverarbeitung in der 2D-Projektionsbene detektiert. Eine derartige Struktur ist beispielsweise ein Twistlock auf einer Ladefläche eines LKWs oder eine Kante auf einem Container. Daraufhin wird die 2D-Projektionsbene in den dreidimensionalen Raum zurückprojiziert. Anschließend wird eine Position der zumindest einen Struktur im dreidimensionalen Raum ermittelt. Durch die Projektion der 3D-Punktwolke zur Weiterverarbeitung in eine 2D-Projektionsbene und die Rücktransformation wird die Berechnungszeit reduziert, ohne dass die Genauigkeit, insbesondere merklich, beeinträchtigt wird. Durch eine derartige Verbesserung der Leistungsfähigkeit wird eine industrielle Nutzung im Kranbereich ermöglicht.

Eine Steuereinheit, welche beispielsweise dem Kran zugeordnet ist, weist Mittel zur Durchführung des Verfahrens auf, welche beispielswiese einen digitalen Logikbaustein, insbesondere einen Mikroprozessor, einen Mikrocontroller oder einen ASIC (application-specific integrated circuit) umfassen. Zusätzlich oder alternativ umfassen die Mittel zur Durchführung des Verfahrens eine GPU oder einen sogenannten "AI Accelerator".

Eine weitere Ausführungsform sieht folgende weitere Schritte vor: Ermitteln zumindest einer 2D-Bounding-Box, welche eine Struktur umfasst, Rückprojizieren der 2D-Projektionsbene innerhalb der zumindest einen 2D-Bounding-Box, Ermitteln zumindest einer 3D-Bounding-Box in der 3D-Punktwolke anhand der zumindest einen 2D-Bounding-Box, Ermitteln einer Position der zumindest einen Struktur innerhalb der 3D-Bounding-Box. Insbesondere wird ein hinsichtlich der Struktur, beispielsweise ein Twistlock, relevanter Bereich in Form von einer möglichst eng umschließenden Bounding-Box detektiert. Beispielsweise ist zusätzliches Wissen über typische Objektgrößen sowie geometrische und/oder andere prozesstechnische Zusammenhänge bei der Ermittlung der 2D-Bounding-Box mit berücksichtigbar. Insbesondere kann eine derartige Bounding-Box als Filter fungieren, wobei Punkte, die innerhalb dieser Box liegen, zur zu detektierenden Struktur gehören oder der zu detektierenden Struktur zugewiesen werden. Eine derartige Verwendung einer Bounding-Box verringert zusätzlich Berechnungszeit.

Eine weitere Ausführungsform sieht vor, dass das Detektieren der zumindest einen Struktur zum Positionieren der Last mittels eines neuronalen Netzes erfolgt. Beispielsweise wird ein Region Based Convolutional Neural Networks (R-CNN), insbesondere ein Faster R-CNN verwendet. Beispielsweise wird zumindest eine 2D-Projektionsbene mit Trainingsdaten des neuronalen Netzes verglichen. Trainingsdaten können unter anderem durch generisches Lernen von Referenzstrukturen wie Twistlocks, Streben usw. erzeugt werden. Mittels eines derartigen neuronalen Netzes kann eine Vielzahl von unterschiedlichen Strukturen zum Positionieren der Last einfach und zuverlässig detektiert werden.

Eine weitere Ausführungsform sieht vor, dass die 2D-Projektionsbene Pixel aufweist, welche Punkte der Projektion repräsentieren, wobei den Pixeln zumindest ein Kanal zugeordnet wird, welcher eine Höheninformation, eine Remission und/oder Informationen zu Flächennormalen umfasst. Durch die Projektion auf eine 2D-Projektionsbene wird die Anzahl der Pixel reduziert, was zu einer Reduzierung der Rechenzeit führt. Durch die Einbeziehung der Höheninformation, der Remission und/oder der Informationen zu Flächennormalen wird die Genauigkeit der Detektion der Struktur, insbesondere beim Rückprojizieren in den dreidimensionalen Raum, verbessert. Bei Verwendung mehrerer Kanäle, welche beispielsweise parallel verarbeitet werden, ist zusätzlich eine verbesserte Genauigkeit erzielbar.

Eine weitere Ausführungsform sieht vor, dass mindestens zwei 2D-Projektionsbenen ermittelt werden, welche sich hinsichtlich eine Projektionsrichtung unterscheiden. Beispielsweise sind die mindestens zwei 2D-Projektionsbenen orthogonal zueinander angeordnet. Durch mindestens zwei 2D-Projektionsbenen ist eine verbesserte Genauigkeit erzielbar.

Eine weitere Ausführungsform sieht vor, dass das Projizieren der 3D-Punktwolke in zumindest zwei Teilebenen erfolgt, welche zur 2D-Projektionsbene zusammengesetzt werden. Dieses Vorgehen reduziert die Laufzeit der Algorithmen. Die zumindest zwei Teilebenen sind beispielsweise quadratisch ausgeführt, wobei ein quadratischer Input-Vektor für das neuronale Netz generiert wird. Ein derartiger quadratischer Input-Vektor reduziert die Berechnungszeit bei einer Weiterverarbeitung im neuronalen Netz.

Eine weitere Ausführungsform sieht vor, dass zumindest eine zusätzliche Übergangs-Ebene ermittelt wird, welche einen Verbindungsbereich zweiter Teilebenen enthält. Insbesondere da neuronale Netze in einem Randbereich von Abbildungen fehleranfälliger sind und vermieden werden soll, dass wichtige Strukturen am Rand eines Slices "zerschnitten" werden, ist durch derartige Übergangs-Ebenen eine verbesserte Genauigkeit erzielbar.

Eine weitere Ausführungsform sieht vor, dass das Erfassen des Objekts mittels eines laserbasierten Sensors erfolgt. Mittels laserbasierter Sensoren lässt sich schnell und kostengünstig eine 3D-Punktwolke eines Objekts erstellen.

Im Folgenden wird die Erfindung anhand der in den Figuren dargestellten Ausführungsbeispiele näher beschrieben und erläutert. Es zeigen
- FIG 1: ein Ablaufdiagramm eines Verfahrens zur Ermittlung einer Zielposition beim automatisierten Positionieren einer Last auf einem Objekt,
- FIG 2: eine schematische Darstellung eines Verfahrens zur Ermittlung einer Zielposition beim automatisierten Positionieren einer Last auf einem Objekt,
- FIG 3: eine dreidimensionale Darstellung eines Twistlocks,
- FIG 4: eine dreidimensionale Darstellung einer klappbaren Seitenborde,
- FIG 5: eine schematische Darstellung eines zweiten Verfahrens zur Ermittlung einer Zielposition beim automatisierten Positionieren eines Containers auf einem LKW,
- FIG 6: eine schematische Darstellung eines dritten Verfahrens zur Ermittlung einer Zielposition beim automatisierten Positionieren eines Containers auf einem LKW,
- FIG 7: eine schematische Darstellung eines vierten Verfahrens zur Ermittlung einer Zielposition beim automatisierten Positionieren eines Containers auf einem LKW,
- FIG 8: eine schematische Darstellung eines fünften Verfahrens zur Ermittlung einer Zielposition beim automatisierten Positionieren eines Containers auf einem LKW,
- FIG 9: eine schematische Darstellung eines sechsten Verfahrens zur Ermittlung einer Zielposition beim automatisierten Positionieren eines Containers auf einem LKW und
- FIG 10: einen Kran mit einem Positionierungssystem.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

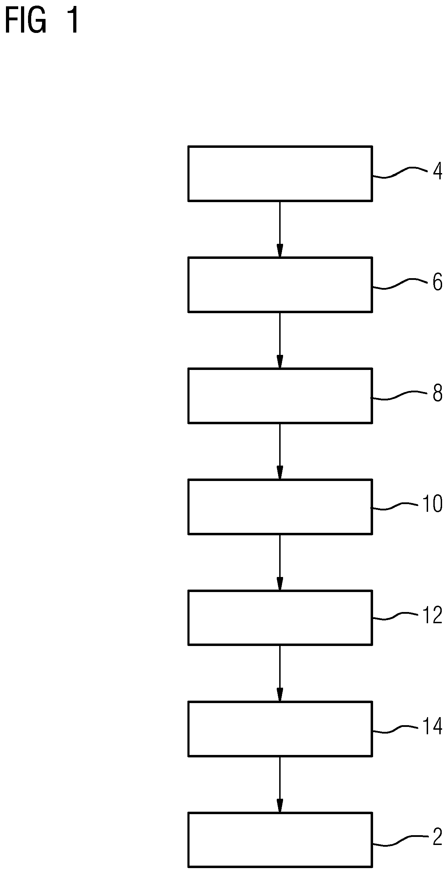

FIG 1 zeigt ein Ablaufdiagramm eines Verfahrens zum automatisierten Positionieren (2) einer Last auf einem Objekt. Das Positionieren 2 der Last erfolgt beispielsweise mittels eines Krans auf einem LKW oder einem Containergebirge. Das Verfahren beinhaltet ein Erfassen 4 des Objekts mittels zumindest eines Sensors. Beispielsweise erfolgt das Erfassen 4 des Objekts mittels eines laserbasierten Sensors. Daraufhin erfolgt ein Erstellen 6 einer 3D-Punktwolke, welche das Objekt repräsentiert. In einem weiteren Schritt erfolgt ein Projizieren 8 der 3D-Punktwolke in zumindest eine 2D-Projektionsbene. Daraufhin erfolgt ein Detektieren 10 zumindest einer Struktur zum Positionieren der Last mittels Bildverarbeitung, wobei beispielsweise Daten der 2D-Projektionsbene mit Trainingsdaten eines neuronalen Netzes verglichen werden. Eine derartige Struktur ist beispielsweise ein Twistlock auf einer Ladefläche eines LKWs. In einem weiteren Schritt erfolgt ein Rückprojizieren 12 der 2D-Projektionsbene in den dreidimensionalen Raum. Anschließend erfolgt ein Ermitteln 14 einer Position der zumindest einen Struktur im dreidimensionalen Raum. Daraufhin erfolgt das eigentliche Positionieren 2 der Last anhand der Position der zumindest einen Struktur.

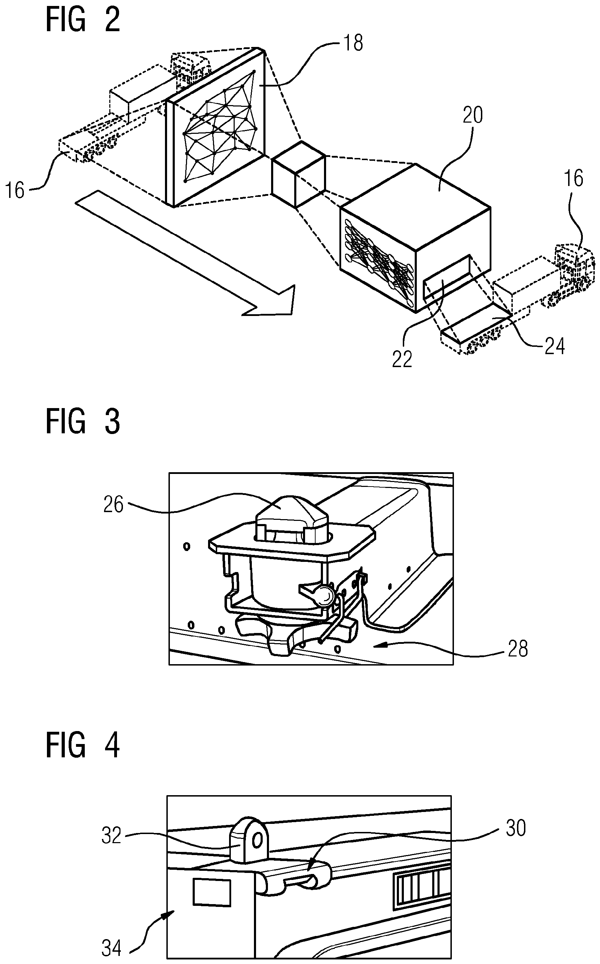

FIG 2 zeigt eine schematische Darstellung eines ersten Verfahrens zur Ermittlung einer Zielposition beim automatisierten Positionieren eines Containers auf einem LKW. Eine von einem Laserscanner, insbesondere 3D Laserscanner, erstellte 3D Punktwolke 16 wird in den zweidimensionalen Raum projiziert. Die 2D-Projektionsbene 18 der 3D Punktwolke 16 wird mittels eines neuronalen Netzes 20 durch maschinelle Lernalgorithmen der Bildverarbeitung weiterverarbeitet. Beispielsweise wird ein Region Based Convolutional Neural Networks (R-CNN), insbesondere ein Faster R-CNN verwendet. Das neuronale

Netz 20 kann unter anderem durch generisches Lernen von Referenzstrukturen wie Twistlocks, Streben usw. trainiert werden. Mittels eines derartigen neuronalen Netzes wird zumindest eine Struktur zum Positionieren der Last detektiert. Das hieraus erlernte Ergebnis 22, insbesondere die Position der zumindest einen Struktur, wird in einem weiteren Schritt zurück in den dreidimensionalen Raum transformiert und als zumindest eine Ziel-Position 24 an den nachfolgenden Prozess, beispielsweise das Positionieren der Last anhand der Position der zumindest einen Struktur, weitergegeben. Die weitere Ausführung des Verfahrens in FIG 2 entspricht der in FIG 1.

FIG 3 zeigt eine dreidimensionale Darstellung eines Twistlocks, welche zum Verriegeln eines Containers auf einer Ladefläche, beispielsweise eines LKWs, vorgesehen ist.

FIG 4 zeigt eine dreidimensionale Darstellung einer klappbaren Seitenborde 30 mit einem Aufsetzzapfen 32, welcher auf einem Tragwagen 34 angeordnet ist.

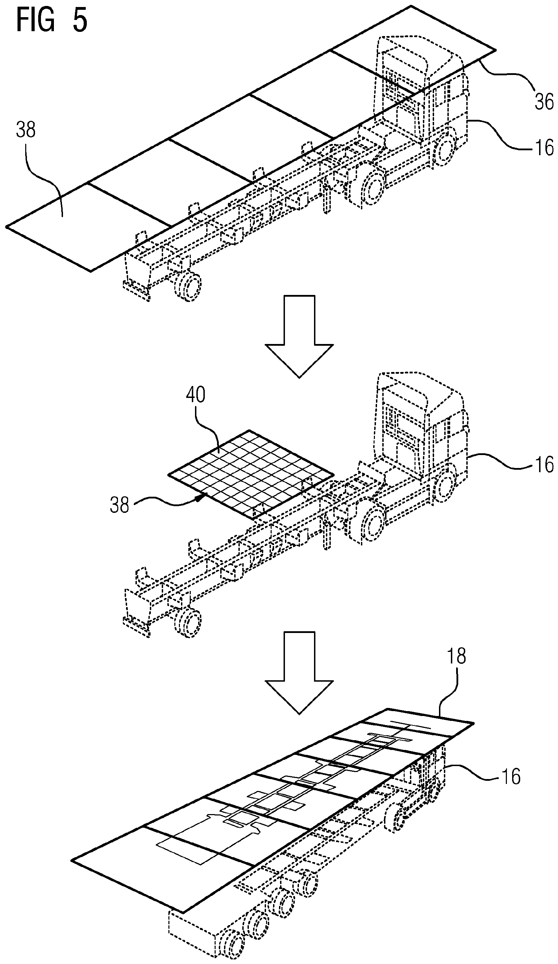

FIG 5 zeigt eine schematische Darstellung eines zweiten Verfahrens zur Ermittlung einer Zielposition beim automatisierten Positionieren eines Containers auf einem LKW. Für die 2D-Projektionsbene 18 der 3D Punktwolke 16 wird ein relevanter Bereich 36 in beispielhaft fünf kleinere Teilebenen 38, Slices genannt, unterteilt. Für jeden dieser fünf kleineren Teilebenen 38,... wobei das Projizieren 8 der 3D-Punktwolke 16 jeweils innerhalb dieser Teilebenen 38 erfolgt. Dieses Vorgehen reduziert die Laufzeit der Algorithmen. Ferner ist ein quadratischer Input-Vektor für die Weiterverarbeitung im neuronalen Netz bereitstellbar. Eine projizierte Teilebene 38 repräsentiert eine gerasterte Version der korrespondierenden 3D Punktwolke 16. Die Teilebene 38 weist Pixel 40 auf, welche Punkte der Projektion repräsentieren. Die beispielhaft fünf Teilebenen werden in einem weiteren Schritt zur 2D-Projektionsbene 18 der 3D Punktwolke 16 zusammengesetzt. Die weitere Ausführung des Verfahrens in FIG 5, insbesondere die Weiterverarbeitung mittels des neuronalen Netzes 20 und die anschließende Rücktransformation in den dreidimensionalen Raum, entspricht der in FIG 2.

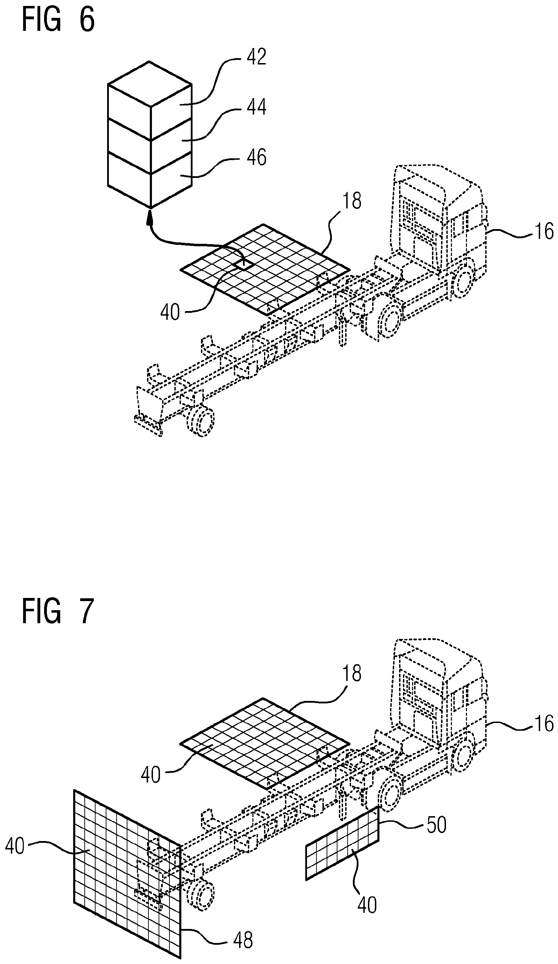

FIG 6 zeigt eine schematische Darstellung eines dritten Verfahrens zur Ermittlung einer Zielposition beim automatisierten Positionieren eines Containers auf einem LKW. Wie in FIG 2 gezeigt wird eine von einem Laserscanner, insbesondere 3D Laserscanner, erstellte 3D Punktwolke 16 in den zweidimensionalen Raum projiziert. Die 2D-Projektionsbene 18 weist Pixel 40 auf, welche Punkte der Projektion repräsentieren. Beispielhaft sind die Punkte jeweils drei Kanälen 42, 44, 46 zugeordnet, wobei ein erster Kanal 42 eine Höheninformation, ein zweiter Kanal 44 eine Remission und ein dritter Kanal 46 Informationen zu Flächennormalen umfasst. Die Kanäle 42, 44, 46 sind kombiniert auswertbar, sodass eine verbesserte Genauigkeit erzielbar ist. Die weitere Ausführung des Verfahrens in FIG 6, insbesondere die Weiterverarbeitung mittels des neuronalen Netzes 20 und die anschließende Rücktransformation in den dreidimensionalen Raum, entspricht der in FIG 2.

FIG 7 zeigt eine schematische Darstellung eines vierten Verfahrens zur Ermittlung einer Zielposition beim automatisierten Positionieren eines Containers auf einem LKW. Anhand der 3D Punktwolke 16 werden beispielhaft drei 2D-Projektionsbenen 18, 48, 50 ermittelt, welche sich hinsichtlich eine Projektionsrichtung unterscheiden. Exemplarisch sind die 2D-Projektionsbenen 18, 48, 50 orthogonal zueinander angeordnet. Die 2D-Projektionsbenen 18, 48, 50 weisen jeweils Pixel 40 auf, welche, wie in FIG 6 gezeigt, mehreren Kanälen 42, 44, 46 zugeordnet werden können, sodass in den 2D-Projektionsbenen 18, 48, 50 jeweils Höheninformationen, Remissionen und/oder Informationen zu Flächennormalen auswertbar sind. Die weitere Ausführung des Verfahrens in FIG 7, insbesondere die Weiterverarbeitung mittels des neuronalen Netzes 20 und die anschließende Rücktransformation in den dreidimensionalen Raum, entspricht der in FIG 2.

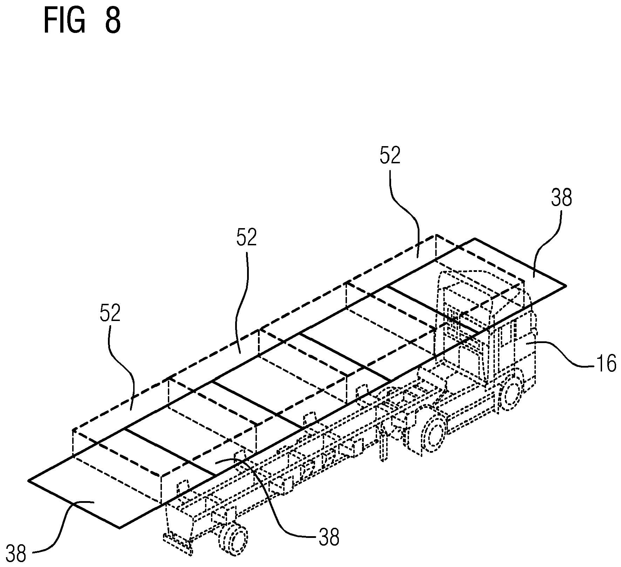

FIG 8 zeigt eine schematische Darstellung eines fünften Verfahrens zur Ermittlung einer Zielposition beim automatisierten Positionieren eines Containers auf einem LKW. Zusätzlich zu den Teilebenen 38 werden Übergangs-Ebenen 52 ermittelt, welche einen Übergangsbereich zwischen den Teilebenen 38 abdecken. Insbesondere da neuronale Netze in einem Randbereich von Abbildungen fehleranfälliger sind und vermieden werden soll, dass wichtige Strukturen am Rand eines Slices "zerschnitten" werden, ist durch derartige Übergangs-Ebenen 52 eine verbesserte Genauigkeit erzielbar. Die weitere Ausführung des Verfahrens in FIG 7 entspricht der in FIG 5.

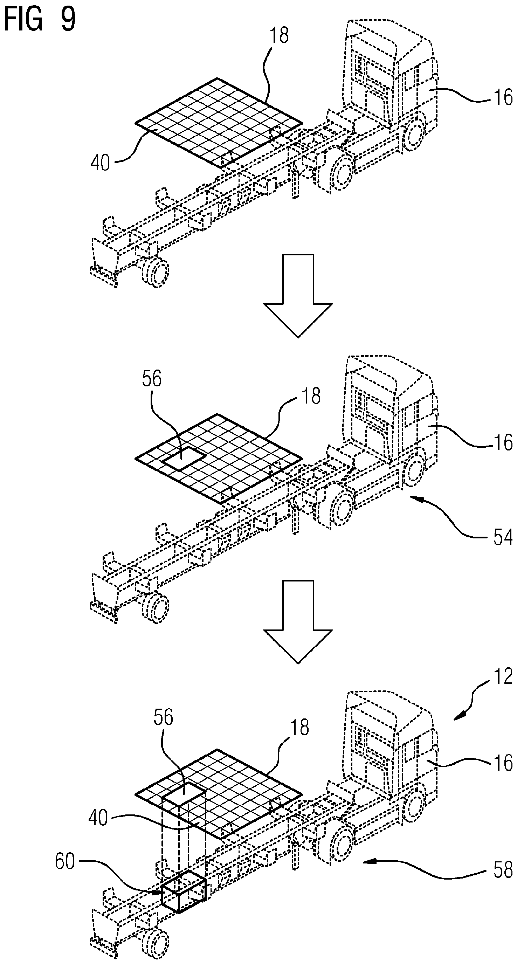

FIG 9 zeigt eine schematische Darstellung eines sechsten Verfahrens zur Ermittlung einer Zielposition beim automatisierten Positionieren eines Containers auf einem LKW. Eine von einem Laserscanner, insbesondere 3D Laserscanner, erstellte 3D Punktwolke 16 wird in den zweidimensionalen Raum projiziert. Die 2D-Projektionsbene 18 weist Pixel 40 auf, welche Punkte der Projektion repräsentieren.

In einem folgenden Schritt erfolgt ein Ermitteln 54 zumindest einer 2D-Bounding-Box 56, welche eine zu detektierende Struktur umfasst. Die Detektion der Struktur erfolgt mittels des neuronalen Netzes 20 durch maschinelle Lernalgorithmen der Bildverarbeitung.

In einem weiteren Verfahrensschritt erfolgt ein Rückprojizieren 12 der 2D-Projektionsbene 18 innerhalb der zumindest einen 2D-Bounding-Box 56 und ein Ermitteln 58 zumindest einer 3D-Bounding-Box 60 in der 3D-Punktwolke 16 anhand der zumindest einen 2D-Bounding-Box 56. Daraufhin erfolgt das Ermitteln 14 einer Position der zumindest einen Struktur gemäß FIG 1 innerhalb der 3D-Bounding-Box 60. Die weitere Ausführung des Verfahrens in FIG 9 entspricht der in FIG 2.

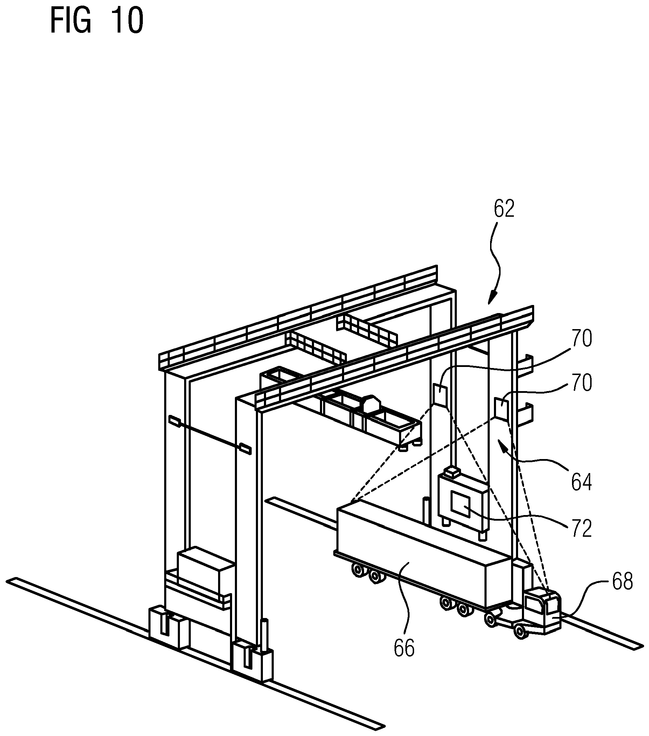

FIG 10 zeigt einen Kran 62 mit einem Positionierungssystem 64. Der Kran 62, welcher unter anderem als Containerkran oder als Portalkran ausgeführt sein kann, ist beispielhaft zum automatisierten Positionieren eines Containers 66 auf einem LKW 68 konfiguriert. Das Positionierungssystem 64 umfasst laserbasierte Sensoren 70 und eine Steuereinheit 72.

Zusammenfassend betrifft die Erfindung ein Verfahren zur Ermittlung einer Zielposition beim automatisierten Positionieren 2 einer Last auf einem Objekt. Um eine, im Vergleich zum Stand der Technik, verbesserte Performance und geringere Berechnungszeiten zu erreichen werden folgende Schritte vorgeschlagen: Erfassen 4 des Objekts mittels zumindest eines Sensors 70, Erstellen 6 einer 3D-Punktwolke 16, welche das Objekt repräsentiert, Projizieren 8 der 3D-Punktwolke 16 in zumindest eine 2D-Projektionsbene 18, Detektieren 10 zumindest einer Struktur zum Positionieren der Last mittels Bildverarbeitung, Rückprojizieren 12 der 2D-Projektionsbene 18 in den dreidimensionalen Raum und Ermitteln 14 einer Position der zumindest einen Struktur im dreidimensionalen Raum.

## Patentansprüche

1. Verfahren zur Ermittlung einer Zielposition beim automatisierten Positionieren (2) einer Last auf einem Objekt aufweisend folgende Schritte:
- Erfassen (4) des Objekts mittels zumindest eines Sensors (70),
- Erstellen (6) einer 3D-Punktwolke (16), welche das Objekt repräsentiert,
- Projizieren (8) der 3D-Punktwolke (16) in zumindest eine 2D-Projektionsbene (18),
- Detektieren (10) zumindest einer Struktur zum Positionieren der Last mittels Bildverarbeitung,
- Rückprojizieren (12) der 2D-Projektionsbene (18) in den dreidimensionalen Raum,
- Ermitteln (14) einer Position der zumindest einen Struktur im dreidimensionalen Raum.

2. Verfahren nach Anspruch 1,
aufweisend folgende weitere Schritte:
- Ermitteln (54) zumindest einer 2D-Bounding-Box (56), welche eine Struktur umfasst,
- Rückprojizieren (12) der 2D-Projektionsbene (18) innerhalb der zumindest einen 2D-Bounding-Box (56),
- Ermitteln (58) zumindest einer 3D-Bounding-Box (60) in der 3D-Punktwolke (16) anhand der zumindest einen 2D-Bounding-Box (56),
- Ermitteln (14) einer Position der zumindest einen Struktur innerhalb der 3D-Bounding-Box (60).

3. Verfahren nach einem der Ansprüche 1 oder 2,
wobei das Detektieren (10) der zumindest einen Struktur zum Positionieren der Last mittels eines neuronalen Netzes erfolgt.

4. Verfahren nach einem der vorherigen Ansprüche,
wobei die 2D-Projektionsbene (18) Pixel (40) aufweist, welche Punkte der Projektion repräsentieren,
wobei den Pixeln (40) zumindest ein Kanal (42, 44, 46) zugeordnet wird,
welcher eine Höheninformation, eine Remission und/oder Informationen zu Flächennormalen umfasst.

5. Verfahren nach einem der vorherigen Ansprüche,
wobei mindestens zwei 2D-Projektionsbenen (18, 48, 50) ermittelt werden, welche sich hinsichtlich einer Projektionsrichtung unterscheiden.

6. Verfahren nach einem der vorherigen Ansprüche,
wobei das Projizieren (8) der 3D-Punktwolke (16) in zumindest zwei Teilebenen (38) erfolgt, welche zur 2D-Projektionsbene (18) zusammengesetzt werden.

7. Verfahren nach Anspruch 6,
wobei zumindest eine zusätzliche Übergangs-Ebene (52) ermittelt wird, welche einen Verbindungsbereich zweiter Teilebenen (38) enthält.

8. Verfahren nach einem der vorherigen Ansprüche,
wobei das Erfassen (4) des Objekts mittels eines laserbasierten Sensors erfolgt.

9. Verfahren zum automatisierten Positionieren (2) einer Last auf einem Objekt umfassend ein Verfahren nach einem der Ansprüche 1 bis 8,
wobei ein Positionieren (2) der Last anhand der Position der zumindest einen Struktur erfolgt.

10. Verfahren nach Anspruch 9,
wobei das Positionieren (2) der Last mittels eines Krans (62) erfolgt.

11. Steuereinheit (72) mit Mitteln zur Durchführung eines Verfahrens nach einem der Ansprüche 1 bis 10.

12. Computerprogramm zur Durchführung eines Verfahrens nach einem der Ansprüche 1 bis 10 bei Ablauf in einer Steuereinheit (72) nach Anspruch 11.

13. Positionierungssystem (64) aufweisend zumindest einen, insbesondere laserbasierten, Sensor und eine Steuereinheit (72) nach Anspruch 11.

14. Kran (62) aufweisend zumindest ein Positionierungssystem (64) nach Anspruch 13.
